# DEMANDE DE BREVET EUROPEEN

(11) **EP 4 386 650 A1**
(43) Date de publication de la demande: **19.06.2024**
(21) Numéro de dépôt: 23212244.0
(22) Date de dépôt: 27.11.2023
(51) Int. Cl.: G06Q 30/018, G06Q 10/06, G06Q 10/08

(54) **PROCEDE DE TRACABILITE DE L'HYDROGENE FOURNI PAR UNE STATION DISTRIBUTRICE D'HYDROGENE POUR VEHICULES ET INSTALLATION ASSOCIEE**

(30) Priorité: 05.12.2022 FR 2212746
(71) Demandeur: Lojelis Holding, 63130 Royat (FR)
(72) Inventeur: JOURDY, Sylvain, 63130 ROYAT (FR)
(74) Mandataire: Dennemeyer & Associates S.A.

(57) **Abrégé**

L'invention concerne un procédé de traçabilité de l'hydrogène fourni par une station distributrice d'hydrogène (7) pour véhicules (12) comprenant au moins les étapes suivantes :
- a) collecter une donnée relative à la quantité d'hydrogène décarboné produit par l'unité autonome de production d'hydrogène (1),
- b) collecter une donnée relative à la quantité d'hydrogène décarboné présent dans l'unité de stockage (5) et provenant de l'unité autonome de production d'hydrogène (1),
- c) collecter une donnée relative à la quantité d'hydrogène non décarboné, présent dans l'unité de stockage (5) et provenant d'une source autre que l'unité autonome de production d'hydrogène,
- d) collecter une donnée relative à la quantité d'hydrogène, décarboné ou non, fourni par la station distributrice (7) à un véhicule identifié (12),
- e) calculer à partir des données collectées aux étapes a) à d) les parts respectives d'hydrogène décarboné et non décarboné fourni à chaque véhicule identifié (12) lors de la distribution d'hydrogène et affecter un score à la distribution,
- f) transmettre les données collectées et calculées aux étapes a) à e) à un organe de gestion de l'hydrogène (11),
- g) après chaque distribution d'hydrogène à un véhicule identifié (12), réactualiser les données. L'invention concerne également une installation de mise en oeuvre du procédé.

## Description

L'invention a trait à un procédé de traçabilité de l'hydrogène fourni par une station distributrice d'hydrogène pour véhicules ainsi qu'à une installation associée.

Le terme véhicule regroupe ici tout type de véhicules terrestres. A titre d'exemples non limitatifs on peut citer des voitures, des camions, des deux roues, des engins agricoles, des engins de travaux publics ou autres. Dans ces véhicules, au moins la force motrice nécessaire au déplacement du véhicule, voir également la force motrice pour actionner au moins un outil monté sur le véhicule, est fournie par un moteur électrique.

Lorsque le moteur est électrique, dans un mode de réalisation, une pile à combustible ou pile à hydrogène installée sur le véhicule et permet de produire l'électricité. L'hydrogène est un élément chimique utilisé généralement sous forme gazeuse. Il est présent dans de nombreux composés naturels, cela en quantité importante mais il n'existe pratiquement pas à l'état moléculaire dans la nature. Il faut donc le produire par divers procédés tels que le reformage ou gazéification d'hydrocarbures comme le méthane, par l'électrolyse de l'eau ou par la dissociation thermochimique de l'eau ou de biomasse. Le choix du procédé se fait en fonction de nombreux paramètres : entre autres le type d'énergie primaire nécessaire, le rendement, la présence d'impuretés, les coproduits ou déchets générés. La quasi-totalité de l'hydrogène aujourd'hui produit provient majoritairement du reformage de gaz naturel. L'électrolyse de l'eau n'est utilisée que pour des productions de petites ou moyennes capacités, si l'électricité est bon marché et/ou si une pureté élevée de l'hydrogène produit est requise. Quel que soit son mode de production l'hydrogène est toujours obtenu à l'état gazeux. L'état liquide est obtenu par détentes successives du gaz, jusqu'à une température de -253°C. Le maintien de l'état liquide de l'hydrogène à cette température nécessite d'importants moyens de production de froid. Aussi, la distribution et le stockage de l'hydrogène, au moins pour son usage dans les véhicules, s'effectue majoritairement sous forme gazeuse, généralement à des pressions de 35 MPa ou 70 MPa qui sont les pressions retenues actuellement par les constructeurs de véhicules automobiles. Le stockage et l'utilisation sous forme liquide sont réservés à de grosses installations et/ou à des véhicules dits lourds tels que des camions ou des bus. Actuellement, il existe deux types de stations de distribution d'hydrogène pour les véhicules : celles distribuant de l'hydrogène à partir d'un ou plusieurs réservoir(s) de stockage et approvisionnées par camions, voies ferrées, voies maritimes ou gazoducs, cela de manière similaire aux stations distributrices d'essence actuelles et celles disposant d'une unité autonome de production d'hydrogène.

En fonction de l'origine de l'hydrogène que l'on distribue, on le qualifie d'hydrogène décarboné si l'hydrogène est produit à partir d'une source d'énergie renouvelable, de préférence sur place au niveau de la station distributrice ou d'hydrogène carboné ou à bas carbone s'il est produit en utilisant une source d'énergie non renouvelable. Dans ce cas, l'hydrogène est généralement produit à distance de la station distributrice et acheminé vers celle-ci par un moyen de transport quelconque, y compris par gazoducs. Une telle distinction selon la source d'énergie utilisée, selon la distance et le moyen de transport entre le lieu de production et la station distributrice permet de définir si l'hydrogène distribué est plus ou moins décarboné, en considérant l'ensemble des étapes, de la production à la distribution.

Dans tous les cas, les contraintes techniques de stockage et/ou de production d'hydrogène sont importantes, tant en termes d'équipements, de protocole de production, de distribution et/ou de stockage que de temps de mise en oeuvre. Ainsi, il n'est pas aussi simple et rapide de réapprovisionner une station de distribution en hydrogène ou de réaliser un cycle de production d'hydrogène que de réapprovisionner une station distribuant des hydrocarbures. Par ailleurs, lors de la distribution, donc lors du remplissage du réservoir du véhicule, il se produit une détente du gaz, l'hydrogène étant toujours présent dans la station de distribution à une pression supérieure à celle d'utilisation dans le véhicule, 35 MPa ou 70 MPa, pour que le remplissage du réservoir du véhicule s'effectue essentiellement par différence de pression. La détente de l'hydrogène contenu dans le réservoir de la station lors du remplissage du réservoir du véhicule produit un échauffement du gaz, le volume occupé par le gaz variant, selon la loi de Joule-Thomson. Lors de ce remplissage, la pression du gaz dans le réservoir du véhicule augmente suffisamment rapidement pour que cette compression du gaz dans le réservoir du véhicule soit considérée comme adiabatique, les échanges de chaleur n'ayant pas le temps de se produire. Il s'ensuit une élévation de température du gaz dans le réservoir du véhicule qui peut atteindre plusieurs dizaines de degrés Celsius. Cette montée en température est fonction de plusieurs facteurs, en particulier la vitesse de remplissage du réservoir du véhicule et la différence de pression entre les réservoirs de la station distributrice et du véhicule. Lorsque la température du réservoir du véhicule aura descendue et sera revenue à la température ambiante, la pression du gaz dans le réservoir du véhicule aura diminuée, selon la loi de Gay-Lussac. Ainsi, la pression finale dans le réservoir du véhicule peut être inférieure à celle initialement prévue. Pour garantir la délivrance de la quantité souhaitée et maintenir autant que possible la pression finale de l'hydrogène dans le réservoir du véhicule au niveau initial, il est fréquent que l'hydrogène stocké dans la station distributrice soit refroidi aux environs de -40°C afin que le réchauffement au cours du remplissage du réservoir du véhicule amène l'hydrogène dans le réservoir au voisinage de la température ambiante, pour autant que les conditions climatiques ne soient pas extrêmes.

Dans une station de distribution, lorsque l'électricité est facilement disponible soit via le réseau électrique soit via des sources d'énergie alternatives et renouvelables telles que l'éolien, le photovoltaïque ou l'hydroélectricité, l'hydrogène peut être produit sur place à l'état gazeux par exemple par électrolyse de l'eau, avant compression, stockage temporaire et distribution. Selon l'origine de l'électricité, l'hydrogène produit à proximité de la station distributrice est plus ou moins décarboné, cela en fonction également du moyen d'acheminement de l'hydrogène à la station distributrice, même si l'hydrogène est produit à distance en utilisant une source d'énergie renouvelable. La production d'hydrogène par la station de distribution est particulièrement adaptée pour des installations de tailles relativement faibles et destinées à approvisionner des véhicules légers tels que des voitures, camionnettes, camions, camping-cars ou tracteurs.

Un cycle complet de production d'hydrogène prêt à être distribué nécessite un certain temps. Afin d'éviter qu'une station de distribution soit en manque d'hydrogène à distribuer, cela pour un temps plus ou moins long selon le fait que la station est approvisionnée à partir d'une installation de production externe ou qu'elle produit elle-même l'hydrogène, on connait par FR-A-3 120 420 un procédé permettant de planifier l'approvisionnement ou la production en hydrogène d'une station distributrice et le ravitaillement en hydrogène d'un utilisateur à partir de la station distributrice. Pour cela, des capteurs placés sur le véhicule permettent d'apprécier les besoins en hydrogène de celui-ci selon la conduite du véhicule. Ces paramètres sont transmis à un module de commande qui par ailleurs reçoit des informations sur l'hydrogène disponible dans les stations, ce qui permet d'informer le véhicule de la disponibilité en hydrogène à proximité et de planifier la distribution.

Une telle solution permet d'optimiser de manière avantageuse la production et la distribution d'hydrogène, tant pour le producteur d'hydrogène que pour l'utilisateur. On connait par WO-A-2022/002331 un procédé de gestion de l'hydrogène fourni par une unité de production à diverses stations distributrices. Le procédé gère la production d'hydrogène vert ou non, selon que les conditions permettent ou non l'utilisation d'éoliennes pour alimenter les stations distributrices. Néanmoins un tel procédé ne permet pas de définir quelle part d'hydrogène décarboné est fourni à chaque véhicule ni sa provenance, à savoir s'il s'agit d'un approvisionnement externe ou d'une production sur place ni quelle source d'énergie est utilisée pour la production d'hydrogène, donc quel est la part, exprimée par exemple en pourcentage, d'hydrogène décarboné dans l'hydrogène qui est fourni à l'utilisateur. Outre une traçabilité de la production d'hydrogène, une telle différenciation permettrait de réaliser un bilan carbone le plus complet possible sur l'utilisation d'hydrogène par un véhicule donné. C'est à ce besoin que se propose de répondre l'invention en offrant un procédé de traçabilité de l'hydrogène fourni par une station distributrice d'hydrogène pour véhicules.

A cet effet, l'invention a pour objet un procédé de traçabilité de l'hydrogène fourni par une station distributrice d'hydrogène pour véhicules, ladite station distributrice étant reliée à au moins une unité autonome de production d'hydrogène alimentée par une énergie renouvelable et à une unité de stockage d'hydrogène, caractérisé en ce qu'il comprend au moins les étapes suivantes :
- a) collecter par au moins un capteur équipant l'unité autonome de production d'hydrogène une donnée relative à la quantité d'hydrogène décarboné produit par l'unité autonome de production d'hydrogène,
- b) collecter par au moins un capteur équipant l'unité de stockage une donnée relative à la quantité d'hydrogène décarboné présent dans un réservoir de l'unité de stockage et provenant de l'unité autonome de production d'hydrogène,
- c) collecter par au moins un capteur équipant l'unité de stockage une donnée relative à la quantité d'hydrogène non décarboné, donc carboné ou à bas carbone, présent dans un autre réservoir différent et indépendant de celui de l'étape b) de l'unité de stockage et provenant d'une source autre que l'unité autonome de production d'hydrogène,
- d) collecter par au moins un capteur équipant la station distributrice une donnée relative à la quantité d'hydrogène, décarboné ou non, fourni par la station distributrice lors de chaque distribution d'hydrogène à un véhicule identifié,
- e) calculer à partir des données collectées aux étapes a) à d) les parts respectives d'hydrogène décarboné et non décarboné fourni à chaque véhicule identifié lors de la distribution d'hydrogène par la station distributrice et affecter un score à chaque distribution d'hydrogène selon la part d'hydrogène décarboné fourni et représentatif de la part d'hydrogène décarboné fourni et illustrant le bilan carbone de l'ensemble de la production d'hydrogène fourni par la station distributrice d'hydrogène,
- f) transmettre les données collectées et calculées aux étapes a) à e) à un organe de gestion de l'hydrogène fourni par la station distributrice d'hydrogène, l'organe de gestion prenant en compte le score affecté à chaque distribution d'hydrogène à un véhicule identifié,
- g) après chaque distribution d'hydrogène à un véhicule identifié, réactualiser les données collectées en effectuant à nouveau les étapes a) à d) en déduisant l'hydrogène fourni lors de la distribution précédente.

Ainsi, grâce à l'invention on dispose d'un procédé permettant de connaitre non seulement la quantité d'hydrogène fourni à un utilisateur, donc à un véhicule donné, par une station distributrice mais également l'origine de cet hydrogène, donc le fait que l'hydrogène fourni est plus ou moins décarboné, cela en fonction de la part respective d'hydrogène décarboné, carboné ou à bas carbone que fournit la station distributive, à partir de l'unité de stockage. Ceci permet non seulement d'optimiser la gestion de la production et le stockage de l'hydrogène mais également de connaitre précisément le bilan carbone de l'hydrogène fourni et, par exemple, de pouvoir moduler la tarification à l'utilisateur en fonction de l'origine de l'hydrogène fourni.

Selon des aspects avantageux mais non obligatoires de l'invention, un tel procédé peut comprendre une ou plusieurs des caractéristiques suivantes :

Lors de l'étape f), au moins certaines des données relatives à la part de chaque type d'hydrogène décarboné, carboné ou à bas carbone, fourni par la station distributrice à au moins à un véhicule identifié sont transmises à une administration ou un organisme d'état.

Lors des étapes a) à d), les capteurs collectent au moins des données relatives à la pression et au volume d'hydrogène produit, stocké ou fourni.

Lors des étapes a) à d) les capteurs collectent également au moins des données relatives aux débits d'hydrogène, à la température, aux fuites.

Lors de l'étape f) les données collectées ou calculées sont transmises de manière sécuritaire par des mécanismes de type blockchain.

L'invention concerne également une installation de mise en oeuvre du procédé selon une des caractéristiques précédentes comprenant au moins une unité autonome de production d'hydrogène, une unité de stockage d'hydrogène, une station distributrice d'hydrogène à partir de l'unité de stockage, caractérisée en ce que l'unité de stockage comprend au moins un réservoir de stockage d'hydrogène décarboné provenant de l'unité autonome de production d'hydrogène et un réservoir de stockage d'hydrogène non décarboné ne provenant pas de l'unité autonome de production d'hydrogène, lesdits réservoirs étant indépendants.

Selon des aspects avantageux mais non obligatoires de l'invention, une telle installation peut comprendre une ou plusieurs des caractéristiques suivantes :

Elle comprend au moins une unité de stockage tampon reliée aux réservoirs de l'unité de stockage et dans laquelle l'hydrogène provenant des réservoirs d'hydrogène décarboné ou non décarboné est mélangé, la part de chaque type d'hydrogène étant connue.

La station distributrice d'hydrogène est alimentée par au moins une unité de stockage tampon.

Les capteurs équipant les divers éléments de l'installation sont de type loT (Internet of Things), communiquant entre eux et avec leur environnement par internet.

L'invention sera mieux comprise et d'autres avantages de celle-ci apparaitront plus clairement à la lecture de la description qui va suivre, donnée uniquement à titre d'exemple non limitatif et faite en référence au dessin annexé dans lequel:

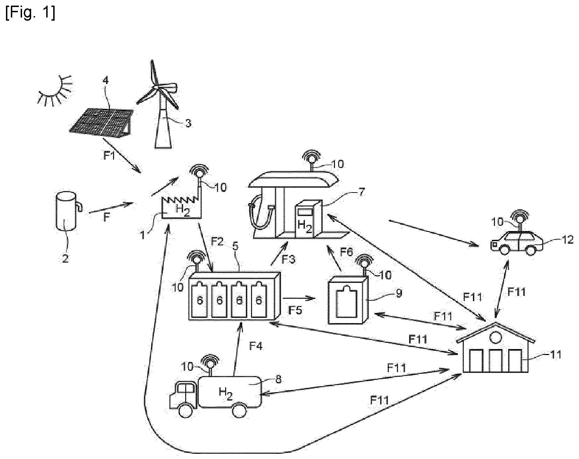

[Fig.1] est une représentation schématique simplifiée selon un mode de réalisation de l'invention.

[Afin de faciliter la compréhension de l'invention, il sera décrit en premier une installation de mise en oeuvre de l'invention. La figure 1 illustre une installation de mise en oeuvre de l'invention selon un mode de réalisation. En partie gauche de la figure 1, une unité autonome de production d'hydrogène 1 est alimentée selon la flèche F en eau stockée dans au moins un réservoir 2 dédié. En variante, l'alimentation en eau provient du réseau, public ou privé, par exemple d'un puits ou d'un captage. Une source d'énergie dite renouvelable c'est-à-dire une source d'énergie non carbonée alimente l'unité de production autonome d'hydrogène 1. Cette source d'énergie est par exemple mais non exclusivement de l'électricité produite par des éoliennes 3 ou de l'électricité produite par des panneaux photovoltaïques 4 ou d'origine hydroélectrique. En variante, plusieurs sources d'énergie renouvelable sont utilisées, simultanément ou non, pour alimenter, selon la flèche F1, l'unité autonome de production d'hydrogène 1. L'hydrogène ainsi produit par l'unité autonome de production d'hydrogène 1 est dit décarboné. Ces diverses sources d'énergie sont soit directement intégrées à l'unité autonome de production d'hydrogène 1, par exemple des panneaux photovoltaïques et ou une éolienne sont installés sur le toit de l'unité 1 soit installées à distance de l'unité autonome de production d'hydrogène 1. Lorsque les sources d'énergie renouvelables sont distantes, l'électricité est acheminée par le réseau public ou local. Dans ce cas, l'hydrogène produit ne peut être considéré comme totalement décarboné. En fonction du moyen de transport utilisé, l'hydrogène est dit à bas carbone, c'est-à-dire qu'il est majoritairement mais non totalement décarboné. Ainsi une source ou plusieurs sources d'énergie renouvelable peuvent alimenter une ou plusieurs unités autonomes de production d'hydrogène 1. Dans tous les cas l'hydrogène est produit par électrolyse de l'eau dans l'unité 1.

L'hydrogène ainsi produit est dirigé, selon la flèche F2, vers une unité de stockage 5. Cette unité de stockage 5 comprend avantageusement plusieurs réservoirs ou bouteilles 6 permettant de stocker l'hydrogène sous forme de gaz comprimé. L'unité de stockage 5 est ici représentée avec quatre réservoirs 6. On conçoit aisément qu'il peut y avoir plus de quatre réservoirs 6. De même plusieurs unités de stockage 5 peuvent être reliées ensemble ou montées en parallèle. Dans tous les cas, la ou les unité(s) 5 sont reliée(s) à la station distributrice d'hydrogène 7 selon la flèche F3.

Une ou plusieurs unités de stockage d'hydrogène 5 peu(ven)t également être alimentée(s) par de l'hydrogène provenant d'une autre source que l'unité autonome de production 1, par exemple par de l'hydrogène produit à partir d'énergies fossiles, donc en utilisant du pétrole et/ou du gaz et/ou du charbon comme source d'énergie pour produire, de manière chimique ou par électrolyse, de l'hydrogène. Dans tous les cas, cet hydrogène, dénommé par la suite hydrogène carboné, est acheminé selon la flèche F4 à l'unité de stockage 5 soit par des camions 8 soit par d'autres moyens de transport terrestre ou maritime, non illustrés, par exemple par des gazoducs, par bateaux, par trains. Selon le moyen de transport et/ou la distance parcourue, le bilan carbone de cet hydrogène carboné est plus ou moins élevé.

Avantageusement, les réservoirs 6 de chaque unité de stockage 5 sont indépendants tout en étant tous reliés selon la flèche F3 à une station distributrice 7, soit individuellement soit par une connexion commune connue en soi, par exemple une lyre. Selon l'invention, certains réservoirs 6 sont dédiés à la réception et au stockage de l'hydrogène décarboné totalement et produit par l'unité autonome de production d'hydrogène 1 et d'autres réservoirs 6 sont dédiés à la réception et au stockage d'hydrogène carboné ou à bas carbone provenant d'une source externe utilisant de l'énergie non renouvelable ou d'une unité autonome de production d'hydrogène distante, l'hydrogène étant acheminé par de moyens ayant un bilan carbone défavorable, par exemple par camions. Pour mémoire le bilan carbone est une méthode officielle permettant de comptabiliser les émissions de gaz à effet de serre (GES) d'une entreprise, d'un produit ou d'un individu. En France, le bilan carbone est utilisé pour le calcul du Bilan des émissions de gaz à effet de serre (BEGES) qui est obligatoire pour les entreprises.

Les réservoirs 6 sont soit reliés directement à la station distributrice d'hydrogène 7 selon la flèche F3 soit reliés, de manière avantageuse, à une unité de stockage tampon 9 selon la flèche F5. L'unité de stockage tampon 9 est elle-même reliée, selon la flèche F6, à la station distributrice d'hydrogène 7. En variante, l'unité de stockage tampon 9 est intégrée à la station distributrice 7. Dans un autre mode de réalisation, plusieurs unités de stockage tampon 9 sont utilisées, soit en parallèle soit en série. La ou les unité(s) de stockage tampon 9 est(sont) remplie(s) avec de l'hydrogène provenant de diverses sources, donc avec de l'hydrogène décarboné ou non décarboné, à savoir à bas carbone ou carboné. En d'autres termes, la ou les unité(s) de stockage tampon 9 forme(nt) une zone de mélange d'hydrogène, avec un bilan carbone variable mais connu, la part de chaque type d'hydrogène, décarboné ou non décarboné, étant connue et, par exemple, exprimé en pourcentage volumique ou massique ou en pression partielle de chaque type d'hydrogène présent dans la ou le unité(s) de stockage tampon 9. il est rappelé que le bilan carbone est établi en tenant compte de chaque étape du processus et donc repose sur des données mesurées, collectées ou fournies par un tiers intervenant dans le processus, par exemple fourni par le gestionnaire du moyen de transport d'hydrogène.

La présence d'au moins une unité de stockage tampon 9 permet également d'avoir une régulation plus fine des débits et/ou des pressions en hydrogène entre le stockage et la distribution par la station distributrice 7. Cela permet entre autres d'éviter les coups de bélier lors de la distribution et de disposer d'une réserve d'hydrogène que l'on peut fournir de manière régulière, avec une pression et/ou un débit contrôlés et constants, cela même si les réservoirs 6 de l'unité de stockage 5 sont partiellement vides ou en cours de remplissage. En variante, on dispose d'au moins une unité de stockage tampon 9 pour chaque type d'hydrogène, décarboné ou non décarboné.

Dans tous les cas les différents éléments principaux constitutifs de l'installation, à savoir au moins l'unité autonome de production d'hydrogène 1, le moyen de transport 8, l'unité de stockage 5, l'unité de stockage tampon 9, la station distributrice 7 sont pourvus chacun d'au moins un capteur, schématiquement représenté et référencé 10. Ces capteurs 10 sont de type loT (Internet of Things) et donc tous équipés d'un module de transmission permettant un échange de données entre eux, entre les divers éléments constitutifs de l'installation et avec un organe central de gestion de données 11. Ici les échanges avec l'organe 11 sont référencés par les doubles flèches F11. Un tel organe central de gestion peut gérer une ou plusieurs installations distantes, les échanges se faisant préférentiellement par Wifi, Internet, ondes radio, Bluetooth ou de manière filaire, par exemple par fibre optique. Un tel organe de gestion des données 11 peut si besoin partager au moins certaines données avec d'autres organes de gestion, par exemple avec une administration ou avec un organisme en charge de la gestion de l'hydrogène, cela à l'échelle locale, par exemple d'une ville ou à l'échelle d'une région ou à l'échelle nationale.

Les capteurs 10 permettent de collecter des données relatives au moins à la pression et à la quantité d'hydrogène fourni ou présent dans les différents éléments de l'installation, cela de manière continue. En variante, la collecte de données peut être périodique pour certains éléments, par exemple pour le moyen de transport 8. On conçoit également que d'autres capteurs ou ces mêmes capteurs collectant des données relatives aux débits instantanés, aux fuites, aux températures, aux volumes restants ou à d'autres données sont également prévues et équipent au moins un des éléments constitutifs de l'installation. Dans tous les cas, les données relatives à l'hydrogène décarboné, donc issu de l'unité autonome de production d'hydrogène 1 et utilisant une source d'énergie renouvelable et les données relatives à l'hydrogène non décarboné, donc carboné ou à bas carbone, fourni à la station distributrice, directement ou via une unité de stockage 5 ou 9 sont collectées et traitées séparément, de sorte qu'il est possible, à tout instant, d'identifier et de suivre la production, le stockage, la distribution de chaque type d'hydrogène. L'organe de gestion des données 11 suit ainsi soit en continu soit périodiquement les données pour chaque type d'hydrogène, ce qui permet d'optimiser la production et le stockage, par exemple en initiant une production par l'unité autonome de production d'hydrogène 1 ou une commande d'hydrogène livré par un moyen de transport 8 selon les besoins identifiés, donc de facto en fonction des véhicules à approvisionner mais également d'optimiser la distribution d'hydrogène par la station distributrice 7, en privilégiant la fourniture de l'un ou l'autre des types d'hydrogène, décarboné ou non décarboné voire un mélange des deux types. On conçoit qu'il est possible d'informer l'utilisateur sur le type d'hydrogène qui va lui être délivré. L'utilisateur peut ainsi avoir la possibilité d'accepter ou non le type d'hydrogène proposé. Ainsi, si la station n'est pas en mesure de distribuer 100% d'hydrogène décarboné mais de l'hydrogène à bas carbone ou un mélange d'hydrogène décarboné et carboné, l'utilisateur peut accepter ou non l'offre au prix proposé.

Dans la mesure où l'on connait quel pourcentage de chacun des types d'hydrogène, décarboné ou non décraboné, donc carboné ou à bas carbone, alimente la station de distribution 7 lors de la distribution d'hydrogène à un véhicule identifié 12 il est aisé de savoir si le véhicule identifié12 est alimenté en totalité lors d'un remplissage par de l'hydrogène décarboné fourni par l'unité 1 ou par de l'hydrogène non décarboné ou par un mélange des deux types d'hydrogène provenant des unités de stockage 5 ou 9. En effet si les réservoirs 6 dédiés à chaque source d'hydrogène sont indépendants les uns des autres au niveau de l'unité de stockage 5, lors de la distribution on peut fournir un mélange des types d'hydrogène, soit en sollicitant plusieurs réservoirs 6 en même temps soit en utilisant l'unité de stockage tampon 9 qui assure un mélange des types d'hydrogène avant la fourniture de l'hydrogène à la station distributrice 1 donc au véhicule identifié 12.

L'unité de gestion 11 peut fournir, à partir des données collectées par les capteurs 10 et celles fournies par les divers intervenants lors du procédé de fabrication, de transport d'l'hydrogène, à savoir par exemple les fournisseurs d'énergie non renouvelables, les transporteurs, un score ou pourcentage reflétant les parts respectives d'hydrogène décarboné et carboné fournis à un véhicule identifié 12 donné lors de son approvisionnement à la station distributrice 1.

L'ensemble des données fournies par les capteurs 10 et les données fournies par les divers intervenants sont collectées et traitées de manière sécuritaire pour chaque type d'hydrogène par des mécanismes de type blockchain.

Pour mémoire, il s'agit d'une technologie de stockage et de transmission d'informations qui offre de hauts standards de transparence et de sécurité car elle fonctionne sans organe central de contrôle. La blockchain est de facto une base de données qui a la particularité d'être partagée simultanément avec tous ses utilisateurs qui ont tous la capacité d'y inscrire des données, selon des règles spécifiques fixées par un protocole informatique sécurisé grâce à la cryptographie. Une blockchain contient l'historique de tous les échanges effectués entre ses utilisateurs depuis sa création. L'identification de chaque partie s'effectue par un procédé cryptographique et utilise un réseau (ou noeud de stockage) d'ordinateurs situés dans le monde entier. Chaque noeud de stockage héberge une copie de la base de données dans lequel est inscrit l'historique des transactions effectuées. Toutes les parties prenantes peuvent y accéder simultanément. La sécurisation repose sur un mécanisme de consensus de tous les noeuds à chaque ajout d'informations. Les données sont déchiffrées et authentifiées par des centres de données. La transaction ainsi validée est ajoutée dans la base sous forme d'un bloc de données chiffrées. Chaque nouveau bloc ajouté à la blockchain est lié au précédent et une copie est transmise à tous les noeuds. L'intégration est chronologique, indélébile et infalsifiable. Avec un mécanisme de type blockchain, l'organe de gestion 11 a accès en permanence aux données relatives à chaque distribution d'hydrogène, que ces données proviennent d'intervenants extérieurs ou non.

Ces données, ou du moins un score en carbone ou le pourcentage d'hydrogène décarboné fourni à un ou des véhicule(s) identifié(s) donné(s) peuvent être transmises ou partagées avec une administration ou un organisme en charge de la production et/ou de l'utilisation de l'hydrogène, sachant qu'un tel organisme ou une telle administration peut être intégré à la blockchain. Il est donc possible de mettre en oeuvre une tarification évolutive en fonction de la quantité respective de chaque type d'hydrogène, avec par exemple un tarif moins élevé pour de l'hydrogène totalement décarboné ou une aide financière, versée selon une période définie, en fonction de la quantité d'hydrogène décarboné distribué. On conçoit que selon que l'hydrogène est plus ou moins décarboné, il existe des tarifs différents. Il est également possible d'obtenir des données et statistiques précises sur chaque type d'hydrogène produit et/ou distribué et donc de mettre en place une taxation spécifique au type d'hydrogène, cela de façon comparable à la taxation de produits pétroliers. Il est également possible de réserver un type d'hydrogène donné, par exemple 100% décarboné à certains véhicules identifiés, par exemple des véhicules de transport en commun.

Le procédé de traçabilité de l'hydrogène fourni par une station distributrice d'hydrogène pour véhicules utilisant une installation conforme à l'invention est maintenant décrit en référence à la figure 1. Une première étape consiste à collecter à l'aide d'au moins un capteur 10 équipant l'unité autonome de production d'hydrogène 1 au moins une donnée relative à la quantité d'hydrogène décarboné produit, cela à un instant donné ou en variante sur un période donnée. Une telle donnée peut être, par exemple, un volume, un poids ou autre.

La seconde étape, qui peut avoir lieu simultanément ou non à la première, consiste à collecter une donnée relative à la quantité d'hydrogène décarboné présent dans l'unité de stockage 5, à un instant donné ou sur une période donnée, cela à l'aide d'au moins un capteur 10 placé par exemple sur certains réservoirs 6, cet hydrogène provenant de l'unité autonome de production d'hydrogène 1.

L'étape suivante consiste à collecter une donnée relative à la quantité d'hydrogène non décarboné, donc carboné ou à bas carbone, présent dans l'unité de stockage 5, à un instant donné ou sur une période donnée, cela à l'aide d'au moins un capteur 10 placé par exemple sur certains réservoirs 6, cet hydrogène provenant d'une source externe, autre que l'unité autonome 1, illustrée ici par le moyen de transport 8. On conçoit que les collectes de données à cette étape et à la précédente s'effectuent avantageusement au même instant ou pour une même période.

Ces diverses étapes peuvent être réalisées simultanément ou non. De même elles peuvent se faire en continu, périodiquement ou sur demande, par exemple lorsqu'un véhicule identifié 12 informe la station distributrice 7 de son approche et de ses besoins en hydrogène, la collecte de données s'effectuant avantageusement en début et en fin d'approvisionnement en hydrogène du véhicule 12.

L'étape suivante est initiée lors de la distribution d'hydrogène par la station distributrice 7. Au moins un capteur 10 présent dans l'unité de stockage 5 collecte une donnée relative à la quantité d'hydrogène décarboné ou non fourni à la station distributrice 7 pour une distribution donnée d'hydrogène à un véhicule identifié 12 et qui provient ou non de l'unité autonome de production d'hydrogène 1. Avantageusement, lors de cette étape, on utilise au moins deux capteurs 10, ces derniers étant dédiés à des réservoirs 6 définis pour le stockage de l'hydrogène décarboné produit par 1 `unité autonome 1 et pour le stockage de l'hydrogène non décarboné provenant d'une source externe. En variante la collecte de telles données est également effectuée par un capteur 10 au niveau de l'unité de stockage tampon 9.

L'étape suivante consiste à calculer à partir des données collectées aux diverses étapes précédentes les parts respectives d'hydrogène décarboné et non décarboné fourni lors de chaque distribution, cette dernière étant définie et identifiée pour chaque véhicule ou, en variante, pour chaque groupe de véhicules identifiés 12, par exemple une flotte de véhicules d'entreprises, ces véhicules pouvant être ou non identiques affecter un score à la distribution d'hydrogène concerné. Le score est un code alphanumérique, un code couleur, un pictogramme ou autre. Il est représentatif de la part d'hydrogène décarboné fourni, soit sous forme d'une valeur numérique ou d'une plage de valeurs. Dans tous les cas le score illustre le bilan carbone relatif au procédé complet de production et de distribution d'hydrogène, ce qui permet d'apprécier si le procédé de production et de distribution d'hydrogène concerné est vertueux ou non en matière de bilan carbone.

La prochaine étape est la transmission des données collectées aux étapes précédentes à l'organe de gestion 11. Une telle transmission peut se faire soit périodiquement soit en direct, lors de chaque distribution d'hydrogène. Lors de cette étape, l'organe de gestion 11 prend en compte le score affecté à chaque distribution selon la part d'hydrogène décarboné fourni. Les données collectées et le score sont non seulement utilisées pour optimiser la production, le stockage et la distribution d'hydrogène mais permettent également d'émettre une facture, soit instantanée soit périodique concernant le montant à régler par l'utilisateur pour l'hydrogène fourni à son véhicule 12. Une telle facture peut ainsi inclure, de façon similaire à la fourniture de produits pétroliers, une taxe spéciale. Une telle taxe peut être variable selon l'origine et/ou le pourcentage de l'hydrogène distribué, décarboné ou non décarboné. L'utilisateur ayant ainsi connaissance du score lié à la fourniture d'hydrogène par une station distributrice donnée peut ainsi optimiser le remplissage de son véhicule, en privilégiant par exemple, les stations distributrices qui peuvent lui fournir majoritairement ou exclusivement de l'hydrogène décarboné.

L'organe de gestion 11 est à même de transmettre, soit en temps réel soit périodiquement, au moins le score affecté à chaque distribution à une administration ou à un organisme en charge de l'hydrogène au niveau de l'état, de la région ou autre. Cette administration ou cet organisme a ainsi tous les éléments nécessaires au calcul du bilan carbone pour la distribution d'hydrogène à un véhicule identifié ou à un groupe de véhicules identifiés et donc la possibilité d'émettre, à destination de l'utilisateur du véhicule et/ou des intervenants dans la chaine de production de l'hydrogène des incitations financières ou non à l'utilisation d'hydrogène décarboné ou du moins à l'amélioration du score, ce dernier illustrant de facto le bilan carbone de l'ensemble de la chaine de production de l'hydrogène.

Une dernière étape consiste, après chaque distribution d'hydrogène à un véhicule(12) ou à un groupe de véhicules identifié(s), de réactualiser les données collectées concernant les quantités d'hydrogène décarboné produit par l'unité autonome (1), les quantités d'hydrogène décarboné et non décarboné présent dans l'unité de stockage (5), en déduisant la quantité et le type d'hydrogène fourni lors de la distribution précédente.

Ici, l'ensemble des données est collecté par des capteurs 10 spécifiques à chaque élément de l'installation. De tels capteurs sont préférentiellement de type loT (Internet of Things), donc des objets connectés entre eux et avec d'autres éléments de leur environnement via internet. Une telle solution associée à des mécanismes de type blockchain permet d'optimiser de manière sécuritaire les échanges concernant la production et la distribution d'hydrogène.

## Revendications

1. Procédé de traçabilité de l'hydrogène fourni par une station distributrice d'hydrogène (7) pour véhicules (12), ladite station distributrice étant reliée à au moins une unité autonome de production d'hydrogène (1) alimentée par une énergie renouvelable (3, 4) et à une unité de stockage d'hydrogène (5, 9), **caractérisé en ce qu'**il comprend au moins les étapes suivantes :
- a) collecter par au moins un capteur (10) équipant l'unité autonome de production d'hydrogène (1) une donnée relative à la quantité d'hydrogène décarboné produit par l'unité autonome de production d'hydrogène (1),
- b) collecter par au moins un capteur (10) équipant l'unité de stockage (5) une donnée relative à la quantité d'hydrogène décarboné présent dans un réservoir (6) de l'unité de stockage (5) et provenant de l'unité autonome de production d'hydrogène (1),
- c) collecter par au moins un capteur (10) équipant l'unité de stockage (5) une donnée relative à la quantité d'hydrogène non décarboné, donc carboné ou à bas carbone, présent dans un autre réservoir (6) différent et indépendant de celui de l'étape b) de l'unité de stockage (5) et provenant d'une source autre que l'unité autonome de production d'hydrogène,
- d) collecter par au moins un capteur (10) équipant la station distributrice (7) une donnée relative à la quantité d'hydrogène, décarboné ou non, fourni par la station distributrice (7) lors de chaque distribution d'hydrogène à un véhicule identifié (12),
- e) calculer à partir des données collectées aux étapes a) à d) les parts respectives d'hydrogène décarboné et non décarboné fourni à chaque véhicule identifié (12) lors de la distribution d'hydrogène par la station distributrice (7) et affecter un score à chaque distribution d'hydrogène selon la part d'hydrogène décarboné fourni et représentatif de la part d'hydrogène décarboné fourni et illustrant le bilan carbone de l'ensemble de la production d'hydrogène fourni par la station distributrice d'hydrogène (7),
- f) transmettre les données collectées et calculées aux étapes a) à e) à un organe de gestion de l'hydrogène (11) fourni par la station distributrice d'hydrogène (7), l'organe de gestion (11) prenant en compte le score affecté à chaque distribution d'hydrogène à un véhicule identifié (12),
- g) après chaque distribution d'hydrogène à un véhicule identifié (12), réactualiser les données collectées en effectuant à nouveau les étapes a) à d) en déduisant l'hydrogène fourni lors de la distribution précédente.

2. Procédé selon la revendication 1, **caractérisé en ce que** lors de l'étape f), au moins certaines des données relatives à la part de chaque type d'hydrogène décarboné, carboné ou à bas carbone, fourni par la station distributrice (7) à au moins à un véhicule identifié (12) sont transmises à une administration ou un organisme d'état.

3. Procédé selon la revendication 1, **caractérisé en ce que** lors des étapes a) à d), les capteurs (10) collectent au moins des données relatives à la pression et au volume d'hydrogène produit, stocké ou fourni.

4. Procédé selon la revendication 1, **caractérisé en ce que** lors des étapes a) à d) les capteurs (10) collectent également au moins des données relatives aux débits d'hydrogène, à la température, aux fuites.

5. Procédé selon la revendication 1, **caractérisé en ce que** lors de l'étape f) les données collectées ou calculées sont transmises de manière sécuritaire par des mécanismes de type blockchain.

6. Installation de mise en oeuvre du procédé selon une des revendications précédentes comprenant au moins une unité autonome de production d'hydrogène (1), une unité de stockage d'hydrogène (5), une station distributrice d'hydrogène (7) à partir de l'unité de stockage (5), **caractérisée en ce que** l'unité de stockage (5) comprend au moins un réservoir (6) de stockage d'hydrogène décarboné provenant de l'unité autonome de production d'hydrogène (1) et un réservoir (6) de stockage d'hydrogène non décarboné ne provenant pas de l'unité autonome de production d'hydrogène (1), lesdits réservoirs (6) étant indépendants.

7. Installation selon la revendication 6, **caractérisée en ce qu'**elle comprend au moins une unité de stockage tampon (9) reliée aux réservoirs (6) de l'unité de stockage (5) et dans laquelle l'hydrogène provenant des réservoirs (6) d'hydrogène décarboné ou non décarboné est mélangé, la part de chaque type d'hydrogène étant connue.

8. Installation selon la revendication 7 **caractérisée en ce que** la station distributrice d'hydrogène (7) est alimentée par au moins une unité de stockage tampon (9).

9. Installation selon la revendication 6, **caractérisée en ce que** les capteurs (10) équipant les divers éléments de l'installation sont de type loT (Internet of Things), communiquant entre eux et avec leur environnement par internet.
